# EUROPÄISCHE PATENTSCHRIFT

(11) **EP 0 504 492 B1**
(45) Veröffentlichungstag und Bekanntmachung des Hinweises auf die Patenterteilung: **28.08.1996**
(21) Anmeldenummer: 91122048.1
(22) Anmeldetag: 21.12.1991
(51) Int. Cl.: H04J 14/02, H04B 5/00

(54) **Anordnung zum Zusammenfassen verschiedener elektrischer Signale mittels optischer Trägermodulation**
Device for combining different electrical signals by means of an optical carrier modulation
Dispositif pour combiner des signaux électriques divers moyennant la modulation d'un porteur optique

(30) Priorität: 20.03.1991 DE 4109019
(43) Veröffentlichungstag der Anmeldung: 23.09.1992
(73) Patentinhaber: ROBERT BOSCH GMBH, 70442 Stuttgart (DE)
(72) Erfinder: Widmann, Friedrich, Dipl.-Ing., W 1000 Berlin 21 (DE)

(56) Entgegenhaltungen:
- DE-A- 3 201 375
- GB-A- 2 214 755
- US-A- 4 236 243
- "Zeitschrift Eisenbahningenieur", Nr. 41, September 1990, Seiten 443 bis 447, R. Herr: "Tunnelfunksystem"

## Beschreibung

Die Erfindung geht von einer Anordnung nach dem Oberbegriff des Anspruchs 1 aus.

Aus der US-A 4 236 243 ist ein Telekommunikationssystem bekannt, bei dem ein Laser einer optischen Leitung vorgeschaltet ist, an der mehrere akustische Wandler in Serie hintereinander angeordnet sind. Jedem der akustischen Wandler ist ein Modulator vorgeschaltet. Die Modulatoren werden elektrisch angesteuert und liefern frequenz- oder phasenmodulierte Unterträger. Diese phasen- bzw. frequenzmodulierten Signale werden den in Form von piezoelektrischen Platten ausgeführten akustischen Wandlern zugeführt, die eine mechanische Belastung der Faser der optischen Leitung bewirken. Dadurch wird die optische Pfadlänge der Faser mit dem modulierten Unterträger variiert, und es ergibt sich auf diese Weise eine Phasenmodulation des optischen Trägersignals. Durch Verkopplung mehrerer Moden bei Multimodenausbreitung wird diese Phasenmodulation in eine Amplitudenmodulation umgewandelt.

Aus der GB 2 214 755 A ist ein Antennensystem bekannt, bei dem empfangene oder zu sendende Funksignale auf ein optisches Trägersignal aufmoduliert werden. Es ist für ein empfangenes Signal genau eine optische Leitung mit genau einem optischen Signal eines Lasers vorhanden. Die Umwandlung eines elektrischen Signals in ein optisches Signal erfolgt mittels eines Filters, einer Spannungsversorgungseinheit und eines Lasers.

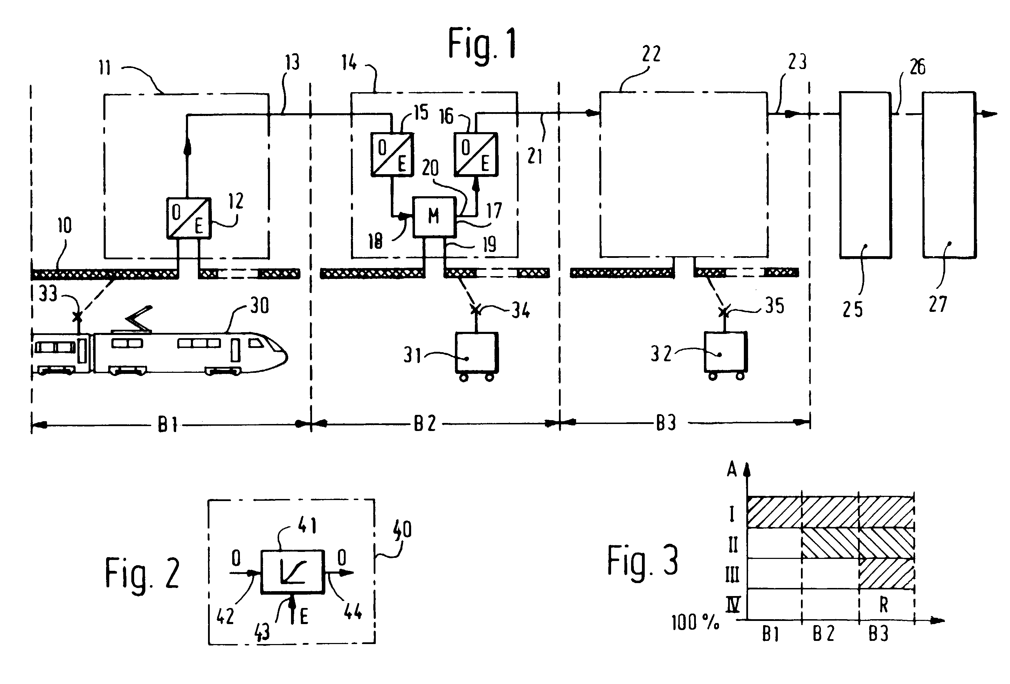

Aus der "Zeitschrift Eisenbahningenieur", Nr. 41, September 1990, Seiten 443 bis 447, "Tunnelfunksystem" ist gemäß Figur 1 ein Tunnelfunksystem bekannt, bei dem 10 ein in einem Tunnel verlegtes Hochfrequenz-Leckkabel bezeichnet, das je nach Tunnellänge in mehrere Kabelabschnitte 81, B2, B3 aufgeteilt ist. Auf der halben Länge des ersten Kabelabschnitts B1 ist an das Hochfrequenz-Leckkabel 10 eine erste Tunnelfunkstelle 11 mit einem elektrisch-optischen Wandler 12 angeschlossen, dessen optischer Ausgang über eine optische Leitung 13 mit einer zweiten Tunnelfunkstelle 14 verbunden ist, die einen optisch-elektrischen Wandler 15 und einen elektrisch-optischen Wandler 16 sowie eine Modulationsvorrichtung 17 aufweist. Die optische Leitung 13 führt an den Eingang des optisch-elektrischen Wandlers 15, dessen Ausgang mit einem ersten Eingang 18 der Modulationsvorrichtung 17 verbunden ist. Ein zweiter elektrischer Eingang 19 der Modulationsvorrichtung 17 ist auf der halben Länge des zweiten Kabelabschnitts B2 mit dem Hochfrequenz-Leckkabel verbunden. Ein Ausgang 20 der Modulationsvorrichtung 17 steht über den elektrisch-optischen Wandler 16 und eine optische Leitung 21 mit einer dritten Tunnelfunkstelle 22 in Verbindung, die den gleichen Aufbau wie die Tunnelfunkstelle 14 hat. Je nach der Länge des Tunnels sind ggf. weitere Kabelabschnitte und weitere Tunnelfunkstellen vorgesehen. An dem Tunnelausgang bzw. an den Ausgang der letzten Tunnelfunkstelle, das ist z.B. die dritte Tunnelfunkstelle 22, schließt sich über eine optische Leitung 23 eine Kopfstation 25 an und an diese über ein Koaxialkabel 26 ein Funkkoppler 27, der eine Verbindung zu dem öffentlichen Fernsprechnetz herstellt.

Mit 30, 31 und 32 sind drei sich im Tunnel aufhaltende Mobilfunkstationen bezeichnet, die je eine Sende- und Empfangsantenne 33, 34 und 35 aufweisen.Die Wirkungsweise des vorstehend beschriebenen Tunnelfunksystems ist folgende.

Soll z.B. von der mobilen Funkstation 30 eine Nachricht über die Kopfstation 25 abgesetzt werden, so wird die Nachricht als erster modulierter Träger über die Sende- und Empfangsantenne 33 an das Hochfrequenz-Leckkabel 10 des ersten Kabelabschnitts B1 abgegeben und mittels des ersten elektrisch-optischen Wandler 12 der ersten Tunnelfunkstelle 11 in ein optisches Signal umgewandelt. Das optische Signal wird über die optische Leitung 13 dem optischen Eingang des ersten optisch-elektrischen Wandlers 15 der zweiten Tunnelfunkstelle 14 zugeführt und mit diesem in ein elektrisches Signal umgewandelt. Befindet sich zur gleichen Zeit die zweite mobile Funkstation 31 in dem Bereich der zweiten Tunnelfunkstelle 14 bzw. des Kabelabschnitts B2, so kann diese ebenfalls eine Nachricht absetzen, die als zweites elektrisches Signal mittels der Modulationsvorrichtung 17 mit dem ersten elektrischen Signal gemischt wird. Der an dem Ausgang 20 der Modulationsvorrichtung 17 liegende zweite modulierte Träger wird mittels des zweiten elektrisch-optischen Wandlers 16 in einen zweiten optisch-modulierten Träger umgewandelt, der über die optische Leitung 21 an die dritte Tunnelfunkstelle 22 gelangt.

Mit der dritten Tunnelfunkstelle 22 kann eine Nachricht der dritten mobilen Funkstation 32 als dritter optischmodulierter Träger über die optische Leitung 23 zusammen mit dem ersten und zweiten optisch-modulierten Träger an die Kopfstation 25 weitergeleitet und nach entsprechender Wandlung in elektrische Signale über das Koaxialkabel 26 der Überleiteinrichtung 27 zugeführt werden.

Der Erfindung liegt die Aufgabe zugrunde, bei einer Anordnung gemäß dem Oberbegriff des Anspruchs 1 den wirtschaftlichen und technischen Aufwand zu verringern.

Diese Aufgabe wird bei einer Anordnung nach dem Oberbegriff des Anspruchs 1 durch die im kennzeichnenden Teil dieses Anspruchs angegebenen Merkmale gelöst.

Die erfindungsgemäße Anordnung mit den Merkmalen des Hauptanspruchs hat den Vorteil, daß bei mehreren empfangenen Signalen alle Signale durch anteilige Intensitätsmodulation auf einen einzigen optischen Träger aufmoduliert werden können, wodurch eine gegenseitige Beeinflussung von verschiedenen Trägern vermieden wird, und daß diese anteilige Intensitätsmodulation direkt mittels kompakter elektro-optischer Modulatoren durchgeführt werden kann, so daß der Umweg über eine Phasenmodulation und der Multimodenausbreitung unter Verwendung aufwendigerer Schaltungsanordnungen ebenso wie die Verwendung zusätzlicher opto-elektronischer und elektro-optischer Wandler überflüssig wird und auf diese Weise Aufwand und Kosten gespart werden können.

Vorteilhaft nach Anspruch 2 ist eine einfache und wenig Aufwand erfordernde Installation von elektro-optischen Modulatoren zum Betrieb einer Tunnelfunkstelle, wobei lediglich der jeweilige optische Ausgang der Modulatoren mit dem optischen Eingang des jeweils benachbarten Modulators verbunden werden muß und der elektrische Eingang einfach an ein im Tunnel verlegtes Leckkabel angeschlossen werden muß.

Ein Ausführungsbeispiel der erfindungsgemäßen Tunnelfunkstelle wird an Hand der Figuren 2 und 3 beschrieben.

Die Figur 2 zeigt eine Tunnelfunkstelle 40 mit einem als Blockschaltungssymbol dargestellten elektro-optischen Modulator 41, das ist vorzugsweise ein Baustein des Typs 6100 der Firma Crystal Technology, der einen optischen Eingang 42, einen elektrischen Eingang 43 und einen optischen Ausgang 44 aufweist. Je eine Tunnelfunkstelle 40 tritt an die Stelle der Tunnelfunkstellen 14 und 22 nach Figur 1.

Bei elektro-optischen Modulatoren wird die Polarisation eines optischen Strahls durch ein elektrisches Signal gedreht. Nach einem Polarisator, der als Analysator dient, entstehen dadurch Intensitätsschwankungen. Die Intensität des durch die elektro-optische Zelle gedrehten Signals bleibt dabei, abgesehen von Reflexionsverlusten, konstant.

Die Figur 3 zeigt den Verlauf der Trägeramplitude A jeweils am Ausgang der Bereiche B1, B2, B3. Am Eingang der Kopfstation 25 liegt somit ein Träger, der in drei Stufen I, II, III moduliert ist. Eine vierte Stufe IV ist der unmodulierte Restträger R.

## Patentansprüche

1. Anordnung zum Zusammenfassen verschiedener elektrischer Signale mittels optischer Trägermodulation, dadurch gekennzeichnet, daß in einer einen optischen Träger führenden optischen Leitung (13, 21, 23) mehrere elektro-optische, jeweils aus einer Baueinheit bestehende Modulatoren (41) hintereinander angeordnet sind, die mittels einer Polarisationsdrehung eine anteilige Intensitätsmodulation des optischen Trägers bewirken.

2. Anordnung nach Anspruch 1 für ein Tunnelfunksystem, dadurch gekennzeichnet, daß ein elektrischer Eingang (43) wenigstens eines elektro-optischen Modulators (41) einer Tunnelfunkstelle (14) mit einem Kabelabschnitt B2 eines in einem Tunnel verlegten Leckkabels (10), daß ein optischer Eingang (42) dieses elektro-optischen Modulators (41) mit einem Ausgang des elektro-optischen Modulators der vorangehenden Funkstelle (11) und daß ein optischer Ausgang (44) des elektro-optischen Modulators mit einem Eingang des elektro-optischen Modulators der nachfolgenden Tunnelfunkstelle (22) bzw. einer Kopfstation (25) verbunden ist.

## Claims

1. Arrangement for combining various electrical signals by means of optical carrier modulation, characterized in that a plurality of electrooptical modulators (41) are arranged in series in an optical cable (13, 21, 23) which carries an optical carrier, which modulators (41) each comprise one unit and produce element-based intensity modulation of the optical carrier by means of polarization rotation.

2. Arrangement according to Claim 1 for a tunnel radio system, characterized in that an electrical input (43) of at least one electrooptical modulator (41) of a tunnel radio point (14) is connected to a cable section B2 of a leaky cable (10) which is laid in a tunnel, in that an optical input (42) of this electrooptical modulator (41) is connected to an output of the electrooptical modulator of the preceding radio point (11), and in that an optical output (44) of the electrooptical modulator is connected to an input of the electrooptical modulator of the subsequent tunnel radio point (22) or of a head station (25).

## Revendications

1. Dispositif pour combiner différents signaux électriques à l'aide d'une modulation de porteuse optique,
caractérisé en ce que
dans une ligne optique (13, 21, 23) traversée par une porteuse optique on a plusieurs modulateurs électro-optiques (41) formés chacun d'un composant placés les uns à la suite des autres et qui assurent, par une rotation de la polarisation, une modulation fractionnée d'intensité de la porteuse optique.

2. Dispositif selon la revendication 1 pour un système radio de tunnel,
caractérisé en ce qu'
une entrée électrique (43) d'au moins un modulateur électro-optique (41) d'un point radio de tunnel (14) est reliée à un segment de câble (B2) d'un câble de fuite (10) placé dans un tunnel, une entrée optique (42) de ce modulateur électro-optique (41) étant reliée à une sortie du modulateur électro-optique du point radio (11) précédent et une sortie optique (44) du modulateur électro-optique est reliée à une entrée du modulateur électro-optique du point radio de tunnel (22) suivant ou d'un poste de tête (25).
